# EUROPÄISCHE PATENTSCHRIFT

(11) **EP 2 741 385 B1**
(45) Veröffentlichungstag und Bekanntmachung des Hinweises auf die Patenterteilung: **06.03.2019**
(21) Anmeldenummer: 13195022.2
(22) Anmeldetag: 29.11.2013
(51) Int. Cl.: H02G 3/32, F16L 3/24, F16L 3/12

(54) **Befestigungsclip und Befestigungsbaugruppe**
Fixing clip and fixing component
Clip de fixation et module de fixation

(30) Priorität: 06.12.2012 DE 102012111886
(43) Veröffentlichungstag der Anmeldung: 11.06.2014
(73) Patentinhaber: Illinois Tool Works Inc., Glenview, IL 60025 (US)
(72) Erfinder: Loewe, Hubert, 66919 Weselberg (DE); Hofmann, Jürgen, 67304 Eisenberg (DE)
(74) Vertreter: Trinks, Ole

(56) Entgegenhaltungen:
- EP-A1- 1 061 302
- EP-A2- 0 191 480
- EP-A2- 1 061 273
- EP-A2- 2 221 518
- DE-U- 7 000 332

## Beschreibung

Die Erfindung betrifft einen Befestigungsclip für zumindest eine Leitung sowie eine Befestigungsbaugruppe mit zumindest zwei insbesondere baugleichen Befestigungsclips.

Befestigungsclips werden verwendet, um Leitungen, beispielsweise Kabel in einem Fahrzeug, zu verlegen. Ein solcher Befestigungsclip hat zumindest einen Halteabschnitt, der eine oder mehrere Leitungen aufnehmen bzw. in Umfangsrichtung umschließen und somit im Fahrzeug fixieren kann und wird fahrzeugfest montiert, sodass die im Halteabschnitt aufgenommenen Leitungen sicher im Fahrzeug gehalten ist.

Zur Fixierung eines solchen Befestigungsclips muss fahrzeugseitig jeweils eine Verbindungsstruktur vorgesehen sein. Um die Anzahl der Verbindungsstrukturen zu reduzieren, sind aus dem Stand der Technik Leitungshalter bekannt, die mehrere Aufnahmen für jeweils eine Leitung aufweisen, sodass mehrere Leitungen, insbesondere parallel, verlegt werden können. Diese Befestigungsclips sind aber nicht flexibel an die Anzahl der Leitungen anpassbar. Des Weiteren ist aus dem Stand der Technik bekannt, dass mehrere Befestigungsclips aneinander befestigt werden, wobei bei diesen Befestigungsclips aber auf die genaue Ausrichtung der Verbindungsstrukturen geachtet werden muss. Diese Befestigungsclips können hermaphroditische Koppelabschnitte aufweisen, wodurch die Montage der Befestigungsclips aneinander erleichtert ist. Ein solcher Befestigungsclip ist beispielswiese in der JP 10160049 A gezeigt.

Die EP 0 191 480 A2 zeigt eine Schelle für Rohre und Schläuche, die aus zwei gleich ausgebildete Formhälften gebildet wird. Die Schellen weisen senkrecht zur Achse und außerhalb der Ausnehmung der Leitung Formschlussvorsprünge sowie Formschlussausnehmungen auf, mit deren Hilfe sich diese untereinander verbinden lassen.

In der DE 70 00 332 ist eine Kabelschelle gezeigt, die an gegenüberliegenden Seiten Kopplungsteile aufweist, um mehrere Kabelschellen untereinander zu verbinden. Die Kopplungsteile sind hierbei so gestaltet, das auch Unebenheiten des Untergrunds ausgeglichen werden können.

Aufgabe der Erfindung ist es, einen Befestigungsclip sowie eine Befestigungsbaugruppe mit mehreren Befestigungsclips bereitzustellen, die eine einfache und flexible Befestigung der einzelnen Befestigungsclips aneinander ermöglicht.

Zur Lösung der Aufgabe ist ein Befestigungsclip mit den Merkmalen des Anspruchs vorgesehen. Die Raststrukturen sind insbesondere so angeordnet, dass bei gekoppelten Verbindungsstrukturen zweier Befestigungsclips die erste Raststruktur eines ersten Befestigungsclips mit der zweiten Raststruktur eines zweiten Befestigungsclips mit identischem Koppelabschnitt und die zweite Raststruktur des ersten Befestigungsclips mit der ersten Raststruktur des zweiten Befestigungsclips verrasten kann. Ein solcher hermaphroditischer Koppelabschnitt ist so ausgebildet, dass dieser mit einem zweiten, baugleichen Koppelabschnitt, der um 180° zum ersten Koppelabschnitt gedreht ist, gekoppelt und somit eine sichere Verbindung zwischen beiden Koppelabschnitten bzw. beiden Befestigungsclips hergestellt werden kann. Bei bisher verwendeten Befestigungsclip sind zwar korrespondiere Koppelabschnitte vorgesehen, wobei die Koppelabschnitte aber unterschiedlich ausgebildet sind, so dass zwei Befestigungsclips mit gleichem Koppelabschnitt nicht aneinander montiert werden können. Es müssen also entweder zwei Sorten Befestigungsclips mit unterschiedlichen Koppelabschnitten oder Befestigungsclips mit zwei separaten, unterschiedlichen Koppelabschnitten vorrätig gehalten werden. Der Koppelabschnitt des erfindungsgemäßen Befestigungsclips ist so ausgebildet, dass zwei Befestigungsclips mit einem solchen identischen Koppelabschnitt auf einfache Weise aneinander befestigt werden können. Da nur eine Sorte Koppelabschnitte vorhanden ist, muss nicht auf die Ausrichtung oder die Art des Koppelabschnitts geachtet werden. Dadurch ist eine wesentlich schnellere und einfachere Montage des Befestigungsclips möglich. Zudem müssen nur Befestigungsclips mit einer Art Koppelabschnitt vorrätig gehalten werden, wodurch die Herstellungskosten weiter reduziert werden. Ein zweiter baugleicher Befestigungsclip kann mit der an der zweiten Verbindungsstruktur vorgesehenen Schiene in die Nut des ersten Befestigungsclips eingeschoben werden. Gleichzeitig wird die Nut des zweiten Befestigungsclips auf die Schiene des ersten Befestigungsclips aufgeschoben, sodass eine sichere Verbindung zwischen den Befestigungsclips hergestellt ist. Beide Rastelemente weisen vorzugsweise zu einer Mittelebene, die zwischen den Verbindungsstrukturen angeordnet ist und den gleichen Abstand zu beiden Verbindungsstrukturen aufweist, den gleichen Abstand auf. Dadurch ist sichergestellt, dass die Raststrukturen eines zweiten Befestigungsclips mit identischen Koppelabschnitt, der um 180° gedreht und so am ersten Befestigungsclip montiert wird, dass die Verbindungsstrukturen ineinander greifen, auch die Rastelemente zusammenwirken können.

Am hermaphroditischen Koppelabschnitt ist eine erste Verbindungsstruktur sowie eine mit der ersten Verbindungsstruktur korrespondierende zweite Verbindungsstruktur vorgesehen, wobei die zweite Verbindungsstruktur bezüglich der ersten Verbindungsstruktur um 180° gedreht und versetzt am Koppelabschnitt angeordnet ist. Die Verbindungsstrukturen sind insbesondere so angeordnet, dass die erste Verbindungsstruktur eines ersten Befestigungsclips in die zweite Verbindungsstruktur eines zweiten Befestigungsclips mit identischem Koppelabschnitt und die zweite Verbindungsstruktur des ersten Befestigungsclips in die erste Verbindungsstruktur des zweiten Befestigungsclips eingreifen kann. Die Verbindungsstrukturen können beliebig am Befestigungsclip bzw. am Koppelabschnitt angeordnet sein. Es ist lediglich sicherzustellen, dass ein zweiter baugleicher Befestigungsclip mit dem Koppelabschnitt an den Koppelabschnitt eines ersten Befestigungsclips geführt werden kann, sodass die Verbindungsstrukturen ineinander eingreifen können. Vorzugsweise müssen die erste und die zweite Verbindungsstruktur dazu um 180° gedreht sein.

Die Nut und die Schiene erstrecken sich quer zur Längsrichtung der Aufnahme. Dadurch kann der Befestigungsclip auf einer montierten Leitung in Längsrichtung verschoben werden, ohne dass die Gefahr besteht, dass die Verbindung zweier benachbarter Befestigungsclips durch Verschieben der Nuten und der Schienen wieder gelöst wird.

Die Raststrukturen sind durch Rastlaschen gebildet sein, die bezüglich einer senkrecht zur Längsrichtung der Nut und der Schiene ausgebildeten Ebene spiegelbildlich ausgebildet sind, wobei die Rastlaschen aber nicht direkt gegenüberliegend, sondern in Längsrichtung der Aufnahme versetzt angeordnet sind.

Am Befestigungsclip ist vorzugsweise ein Befestigungsabschnitt vorgesehen, der insbesondere eine Aufnahme für einen Befestigungsbolzen aufweist, um den Befestigungsclip fahrzeugfest zu montieren. Werden mehrere dieser Befestigungsclips aneinander montiert, ist durch die sichere Koppelung der Befestigungsclips über die Koppelabschnitte die Befestigung eines einzelnen Befestigungsclips an einem Befestigungsbolzen ausreichend, um eine gesamte Baugruppe mit mehreren Befestigungsclips fahrzeugfest zu montieren.

Die Befestigungsaufnahme erstreckt sich beispielsweise senkrecht zur Längsrichtung der Aufnahme für die Leitung, sodass eine Leitung, die im montierten Befestigungsclip gehalten wird, parallel zu einem fahrzeugfesten Bauteil geführt werden kann. Vorzugsweise sind in der Befestigungsaufnahme Fixierelemente, insbesondere Rastelemente für den Befestigungsbolzen vorgesehen, die den Befestigungsclip am Befestigungsbolzen fixieren können.

Um mehrere baugleiche Befestigungsclips aneinander zu montieren, sind vorteilhafterweise zwei, insbesondere an gegenüberliegenden Seiten vorgesehene Koppelabschnitte am Befestigungsclip vorgesehen, sodass an einem erfindungsgemäßen Befestigungsclip beidseitig ein baugleicher Befestigungsclip bzw. ein Befestigungsclip mit identischem Koppelabschnitt montiert werden kann.

Erfindungsgemäß ist des Weiteren eine Befestigungsbaugruppe mit zumindest zwei, insbesondere baugleiche, erfindungsgemäße Befestigungsclips vorgesehen, wobei der zweite Befestigungsclip so gedreht ist, dass der Koppelabschnitt des zweiten Befestigungsclips mit dem Koppelabschnitt des ersten Befestigungsclips gekoppelt ist. Der zweite Befestigungsclip ist vorzugsweise um 180° gedreht.

Die Befestigungsclips weisen vorzugsweise eine erste Verbindungsstruktur sowie eine mit der ersten Verbindungsstruktur korrespondierende zweite Verbindungsstruktur auf, wobei die erste Verbindungsstruktur des ersten Befestigungsclips in die zweite Verbindungsstruktur des zweiten Befestigungsclips und die zweite Verbindungsstruktur des ersten Befestigungsclips in die erste Verbindungsstruktur des zweiten Befestigungsclips eingreifen kann.

Die ersten Verbindungsstrukturen können beispielsweise eine sich insbesondere von der Oberfläche weg erweiternde Nut aufweisen und die zweiten Verbindungsstrukturen jeweils eine Schiene, die in die Nut eingreifen kann und insbesondere an ihrem freien Ende eine in Längsrichtung verlaufende Verdickung aufweist. Insbesondere können sich die Nuten und die Schienen quer zur Längsrichtung der Aufnahme erstrecken.

Die Befestigungsclips können jeweils eine erste Raststruktur sowie eine zweite, zur ersten Raststruktur korrespondierende Raststruktur aufweisen, wobei die erste Raststruktur des ersten Befestigungsclips mit der zweiten Raststruktur des zweiten Befestigungsclips und die zweite Raststruktur des ersten Befestigungsclips mit der ersten Raststruktur des zweiten Befestigungsclips verrasten kann.

Zumindest einer der Befestigungsclips kann zwei, insbesondere gegenüberliegende Koppelabschnitte aufweisen, sodass an diesem zwei Befestigungsclips mit identischem Koppelabschnitt befestigt werden können, und somit auch mehrere Befestigungsclips aneinander befestigt werden können.

Weitere Vorteile und Merkmale ergeben sich aus der nachfolgenden Beschreibung in Verbindung mit den beigefügten Zeichnungen. In diesen zeigen:
- Figur 1 eine erste perspektivische Ansicht eines erfindungsgemäßen Befestigungsclips,
- Figur 2 eine zweite perspektivische Ansicht des Befestigungsclips aus Figur 1,
- Figur 3 eine dritte perspektivische Ansicht des Befestigungsclips aus Figur 1,
- Figur 4 einen ersten Befestigungsclip einer erfindungsgemäßen Befestigungsbaugruppe während der Montage,
- Figur 5 die Befestigungsbaugruppe aus Figur 4 in einem zweiten Montageschritt,
- Figur 6 die Befestigungsbaugruppe aus Figur 4 in montiertem Zustand,
- Figur 7 eine Schnittansicht durch die Koppelabschnitte der Befestigungsclips der montierten Befestigungsbaugruppe aus Figur 6, und
- Figur 8 eine zweite Schnittansicht durch die Befestigungsbaugruppe aus Figur 6.

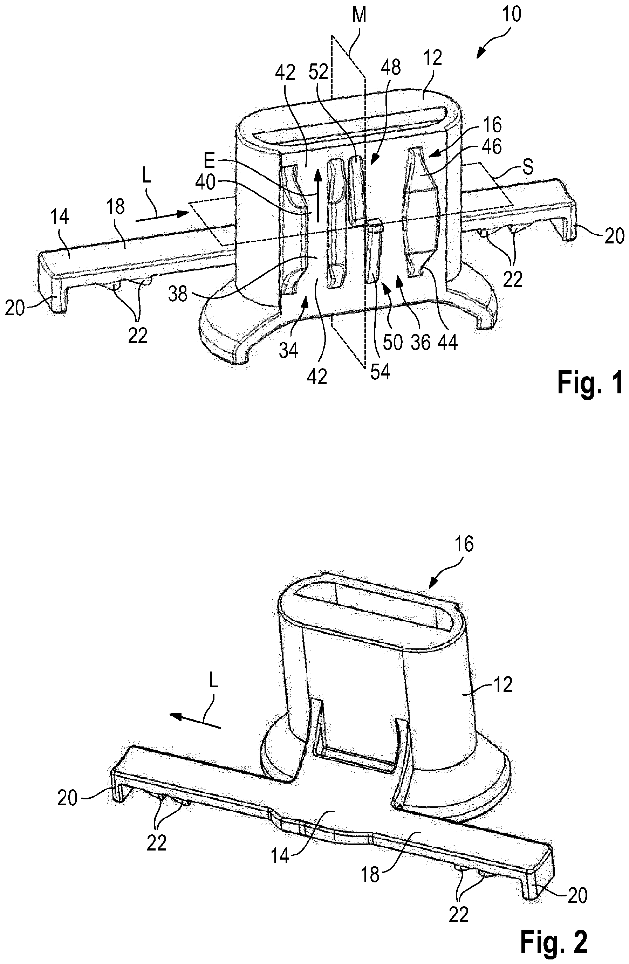

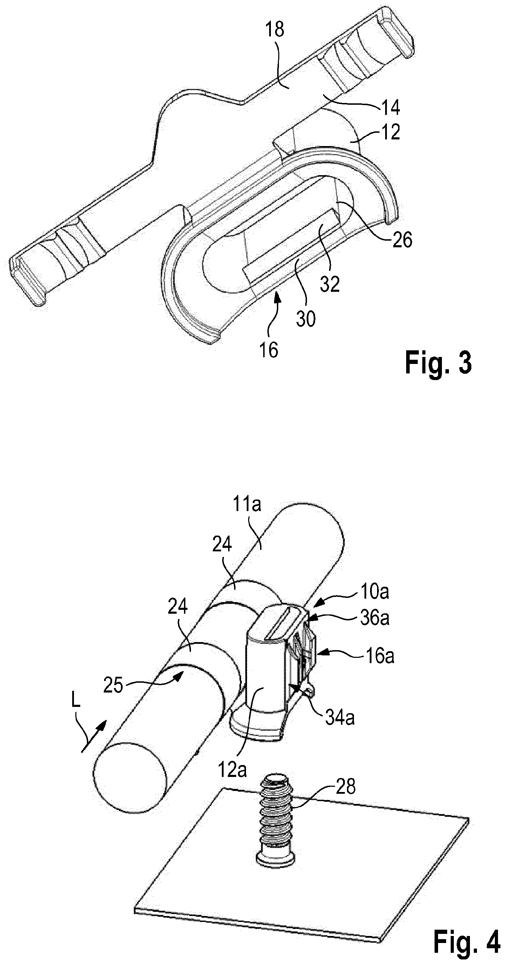

In den Figuren 1 bis 3 ist ein Befestigungsclip 10 für eine Leitung 11 (siehe Figuren 4 bis 6), beispielsweise ein Kabel, gezeigt. Der Befestigungsclip 10 hat einen Befestigungsabschnitt 12 zur fahrzeugfesten Montage des Befestigungsclips 10 sowie einen Halteabschnitt 14 für die Leitung 11 und einen Koppelabschnitt 16 zum Koppeln des Befestigungsclips 10 mit einem zweiten, baugleichen Befestigungsclip 10.

Der Halteabschnitt 14 hat einen in einer Längsrichtung L verlaufenden Steg 18 mit mehreren Abstandshaltern 20, die an einem fahrzeugfesten Bauteil anliegen können. Am Steg 18 sind des Weiteren mehrere Rastnasen 22 vorgesehen, an welchen eine Schelle 24 (siehe Figuren 4 bis 6), ein Kabelbinder oder ein ähnlichesBauteil zur Fixierung einer Leitung 11 gehalten sein kann, das eine Aufnahme 25 für die Leitung bildet.

Der Befestigungsabschnitt 12 weist eine sich quer zur Längsrichtung L des Steges 18 bzw. der Aufnahme 25 erstreckende Befestigungsaufnahme 26 für einen Befestigungsbolzen 28 (siehe Figur 4) auf. In der Befestigungsaufnahme 26 sind Fixierelemente, in der hier gezeigten Ausführungsform Rastelemente 30, vorgesehen, die am Befestigungsbolzen 28 verrasten und den Befestigungsclip 10 an diesem fixieren können.

Die Außenwand 32 der Befestigungsaufnahme 26 ist flexibel ausgebildet, sodass diese an verschieden große Befestigungsbolzen 28 bzw. an verschiedene Befestigungsbolzenformen angepasst werden kann.

Der Koppelabschnitt 16 des Befestigungsclips 10 weist eine erste Verbindungsstruktur 34 sowie eine zweite Verbindungsstruktur 36 auf.

Die erste Verbindungsstruktur 34 ist durch eine Nut 38 gebildet, die sich von einer länglichen Öffnung 40 weg erweitert. In Erstreckungsrichtung E der Nut 38 ist die Nut 38 offen und weist an ihren Enden jeweils Öffnungen 42 auf.

Die zweite Verbindungsstruktur 36 ist durch eine parallel zur Nut 38 verlaufende Schiene 44 gebildet, die an ihrem freien Ende eine in Erstreckungsrichtung E der Nut 38 verlaufende Verdickung 46 aufweist, die in Erstreckungsrichtung E an ihren Endpunkten schmaler wird.

Die zweite Verbindungsstruktur 36 ist korrespondierend zur ersten Verbindungsstruktur 34 ausgebildet, das heißt, die Schiene 44 ist so ausgebildet, dass diese mit der Verdickung 46 in Längsrichtung E in die Nut 38 eingeschoben werden könnte, so dass quer zur Erstreckungsrichtung E und zur Längsrichtung L eine formschlüssige Verbindung hergestellt werden könnte.

Die zweite Verbindungsstruktur 36 ist aber gegenüber der ersten Verbindungsstruktur 34 um 180° gedreht am Koppelabschnitt angeordnet, so dass beide Verbindungsstrukturen 34, 36 in die gleiche Richtung weisen.

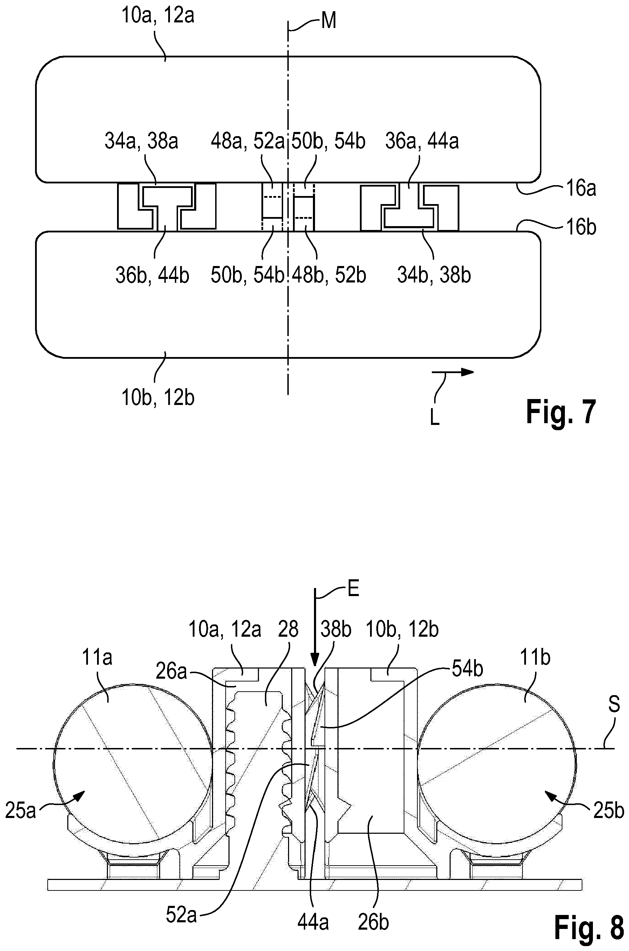

Des Weiteren ist die zweite Verbindungsstruktur 36 gegenüber der ersten Verbindungsstruktur in Längsrichtung L der Aufnahme 25 bzw. quer zur Erstreckungsrichtung E, die in der hier gezeigten Ausführungsform senkrecht zur Längsrichtung L der Aufnahme 25 angeordnet ist, versetzt am Koppelabschnitt 16 angeordnet. Bezüglich einer senkrecht zur Erstreckungsrichtung E angeordneten Spiegelebene S (siehe Figur 8) sind die Verbindungsstrukturen spiegelsymmetrisch ausgebildet.

Am Koppelabschnitt 16 sind des Weiteren Raststrukturen 48, 50 vorgesehen, die jeweils durch eine federnde Rastlasche 52, 54 gebildet sind. Die Rastlaschen 52, 54 verlaufen ebenfalls in Längsrichtung E der Nut 38. Die Raststrukturen 48, 50 sind des Weiteren ebenfalls in Längsrichtung L zueinander versetzt. Bezüglich der Spiegelebene S sind die Rastlaschen 52, 54 spiegelsymmetrisch ausgebildet, wobei die Rastlaschen, wie bereits erläutert, bezüglich dieser Spiegelebene S nicht gegenüberliegend, sondern in Längsrichtung L versetzt angeordnet sind.

Wie insbesondere in Figur 1 und 7 zu sehen ist, befinden sich die erste Verbindungsstruktur 34 sowie die erste Raststruktur 48 bezüglich einer virtuellen Mittelebene M auf einer ersten Seite dieser Mittelebene M und die zweite Verbindungsstruktur 36 und die zweite Raststruktur 50 auf der zweiten Seite der Mittelebene M. Die Mittelachsen der ersten Verbindungsstruktur 34 bzw. der Nut 38 und der zweiten Verbindungsstruktur 36 bzw. der Schiene 44 weisen zu dieser Mittelebene M den gleichen Abstand auf. Der Abstand beider Raststrukturen 48, 50 zur Mittelebene M ist ebenfalls gleich groß.

Der erfindungsgemäße Befestigungsclip 10 kann verwendet werden, um mehrere Leitungen fahrzeugfest zu montieren. Dazu wird an einem ersten Befestigungsclip 10a eine Leitung 11a montiert und anschließend ein zweiter Befestigungsclips 10b mit dem Koppelabschnitt 16b am Koppelabschnitt 16a des ersten Befestigungsclips 10a montiert (Figuren 4 bis 6). Durch die Koppelabschnitte 16a, 16b wird, wie nachfolgend erläutert wird, eine Koppelung zwischen den Befestigungsclips 10a, 10b hergestellt, so dass lediglich einer der Befestigungsclips 10a, 10b fahrzeugfest, beispielsweise an einem Befestigungsbolzen 28, befestigt werden muss.

Die Montage und Funktion einer solchen Befestigungsbaugruppe 58 mit zwei baugleichen Befestigungsclips 10a, 10b ist in den Figuren 4 bis 6 dargestellt.

Beide Befestigungsclips 10a, 10b sind in dieser Ausführungsform baugleich ausgebildet, wobei es lediglich erforderlich ist, dass beide Befestigungsclips einen identischen hermaphroditischen Koppelabschnitt 16a, 16b aufweisen. Die übrige Gestaltung des Befestigungsclips 10a, 10b, insbesondere die Ausgestaltung der Halteabschnitte 14a, 14b, kann beliebig gewählt werden.

In einem ersten Montageschritt (Figur 4) wird ein erster Befestigungsclip 10a mit einer daran montierten Leitung 11a an einem fahrzeugfesten Befestigungsbolzen 28 montiert. Der Befestigungsclip 10a wird dazu mit der Befestigungsaufnahme 26a auf den Befestigungsbolzen 28 aufgeschoben, wobei die Rastelemente 30a des Befestigungsclips 10a am Befestigungsbolzen verrasten.

Die Leitung 11a kann aber prinzipiell auch nach der Montage des Befestigungsclips 10a am Befestigungsbolzen 28 am Halteabschnitt 14a montiert werden.

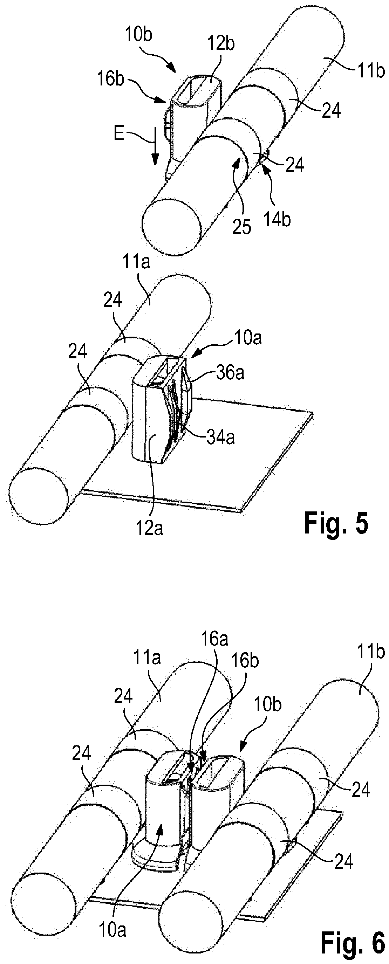

Anschließend wird ein zweiter, baugleicher Befestigungsclip10b, an dem eine Leitung 11b montiert ist, am ersten Befestigungsclip 10a montiert (Figuren 5 und 6). Dazu ist der zweite Befestigungsclip 10b bezüglich des ersten Befestigungsclips 10a um 180° gedreht, sodass die Koppelabschnitte 16a, 16b einander gegenüberliegend ausgerichtet sind.

Der zweite Befestigungsclip 10b wird in Erstreckungsrichtung E auf den ersten Befestigungsclip 10a aufgeschoben, wobei die Schiene 44b des zweiten Befestigungsclips 10b in die Nut 38a des ersten Befestigungsclips 10a eingreift und die Nut 38b des zweiten Befestigungsclips 10b auf die Schiene 44a des ersten Befestigungsclips 10a aufgeschoben wird (Figuren 6 und 7).

Die erste Verbindungsstruktur 34a des ersten Befestigungsclips 10a greift also in die zweite Verbindungsstruktur 36b des zweiten Befestigungsclips 10b ein und die zweite Verbindungsstruktur 36a des ersten Befestigungsclips 10a in die erste Verbindungsstruktur 34b des zweiten Befestigungsclips 10b.

Da die Koppelabschnitte 16 hermaphroditisch ausgebildet sind, ist so eine Montage zweier baugleicher Koppelabschnitte 16 bzw. eine Montage zweier Befestigungsclips 10a, 10b mit identischen hermaphroditischen Koppelabschnitten 16a, 16b möglich.

Ist der zweite Befestigungsclip 10b vollständig auf den ersten Befestigungsclip 10a aufgeschoben, verrastet die Rastlasche 52a der ersten Raststruktur 48a des ersten Befestigungsclips 10a mit der Rastlasche 54b der zweiten Raststruktur 50b des zweiten Befestigungsclips 10b. Ebenso verrastet die Rastlasche 54a der zweiten Raststruktur 50a des ersten Befestigungsclips 10a mit der Rastlasche 52b der ersten Raststruktur 48b des zweiten Befestigungsclips 10b.

Durch die Verbindung der ersten Raststruktur 48a des ersten Befestigungsclips 10a und der zweiten Raststruktur 50b des zweiten Befestigungsclips 10b ist eine weitere Verschiebung des zweiten Befestigungsclips 10b in Längsrichtung E der Nut verhindert. Die Koppelung der zweiten Raststruktur 50a des ersten Befestigungsclips 10a und der ersten Raststruktur 48b des zweiten Befestigungsclips 10b verhindert eine Verschiebung entgegen der Längsrichtung E, sodass in Erstreckungsrichtung E keine Verschiebung der Befestigungsclips 10a, 10b möglich ist.

In Kombination mit der formschlüssigen Verbindung der Verbindungsstrukturen 34a und 36b bzw. 36a und 34b sind beide Befestigungsclips 10a, 10b sicher miteinander gekoppelt.

Wie in den Figuren 7 und 8 zu sehen ist, liegen die Mittelebenen M sowie die Spiegelebenen S beider Befestigungsclips 10 in montiertem Zustand jeweils in einer Ebene.

Es ist auch denkbar, dass an einem Befestigungsclip 10 zwei Koppelabschnitte 16 vorgesehen sind, wobei die Koppelabschnitte 16 gegenüberliegend am Befestigungsclip 10 ausgebildet sind, sodass beidseitig eine Montage eines weiteren Befestigungsclips 10 möglich ist.

Die Koppelabschnitte 16a, 16b können auch abweichend von der hier gezeigten Ausführungsform eine gekrümmte Oberfläche aufweisen. Es ist lediglich sicherzustellen, dass die Koppelabschnitte 16a, 16b so ausgebildet sind, dass die Verbindungsstrukturen 34a und 36b bzw. 36a und 34b und die Raststrukturen 48a und 50b bzw. 48b und 50a ineinandergreifen können.

## Patentansprüche

1. Befestigungsclip (10, 10a, 10b) für zumindest eine Leitung (11a, 11b), mit einem Halteabschnitt (14, 14a, 14b) mit einer sich entlang einer Längsrichtung (L) erstreckenden Aufnahme (25, 25a, 25b) für die Leitung (11a, 11b) und mindestens einem hermaphroditischen Koppelabschnitt (16, 16a, 16b) zum Verbinden des Befestigungsclips (10, 10a, 10b) mit einem zweiten baugleichen Befestigungsclip (10, 10a, 10b), wobei am Koppelabschnitt (16, 16a, 16b) eine erste Verbindungsstruktur (34, 34a, 34b) sowie eine mit der ersten Verbindungsstruktur (34, 34a, 34b) korrespondierende zweite Verbindungsstruktur (36, 36a, 36b) vorgesehen sind, wobei die erste Verbindungsstruktur (34, 34a, 34b) eine sich insbesondere von einer länglichen Öffnung (40, 40a, 40b) weg erweiternde und in einer Erstreckungsrichtung (E) offene Nut (38, 38a, 38b) aufweist und die zweite Verbindungsstruktur (36, 36a, 36b) eine parallel zur Nut (38, 38a, 38b) verlaufende, vorstehende Schiene (44, 44a, 44b) und insbesondere an ihrem freien Ende eine Verdickung (46, 46a, 46b) aufweist, **dadurch gekennzeichnet, dass** die erste Verbindungsstruktur (34, 34a, 34b) und die zweite Verbindungsstruktur (36, 36a, 36b) entlang der Längsrichtung (L) der Aufnahme (25) versetzt angeordnet sind und sich die Nut (38, 38a, 38b) und die Schiene (44, 44a, 44b) quer zur Längsrichtung (L) der Aufnahme (25, 25a, 25b) erstrecken, wobei am Koppelabschnitt (16, 16a, 16b) eine erste Raststruktur (48, 48a, 48b) sowie eine zweite, zur ersten Raststruktur (48, 48a, 48b) korrespondierende Raststruktur (50, 50a, 50b) vorgesehen sind, wobei die zweite Raststruktur (50, 50a, 50b) bezüglich der ersten Raststruktur (48, 48a, 48b) um 180° versetzt angeordnet ist und die Raststrukturen (48, 48a, 48b, 50, 50a, 50b) sich quer zur Längsrichtung (L) der Aufnahme (25,25a,25b) erstrecken und jeweils eine Rastlasche (52, 52a, 52b, 54, 54a, 54b) aufweisen, wobei die Rastlaschen bezüglich einer senkrecht zur Erstreckungsrichtung (E) der Nut (38, 38a, 38b) und der Schiene (44, 44a, 44b) angeordneten Ebene spiegelbildlich ausgebildet sind.

2. Befestigungsclip nach Anspruch 1, **dadurch gekennzeichnet, dass** die zweite Verbindungsstruktur (36, 36a, 36b) bezüglich der ersten Verbindungsstruktur (34, 34a, 34b) um 180° verdreht und versetzt am Koppelabschnitt (16, 16a, 16b) angeordnet ist, wobei die Verbindungsstrukturen (34, 34a, 34b, 36, 36a, 36b) insbesondere so angeordnet sind, dass die erste Verbindungsstruktur (34a) eines ersten Befestigungsclips (10a) in die zweite Verbindungsstruktur (36b) eines zweiten Befestigungsclips (10b) mit identischem Koppelabschnitt (16b) und die zweite Verbindungsstruktur (36a) des ersten Befestigungsclips (10a) in die erste Verbindungsstruktur (34a) des zweiten Befestigungsclips (10b) eingreifen kann.

3. Befestigungsclip nach Anspruch 1, **dadurch gekennzeichnet, dass** ein Befestigungsabschnitt (12, 12a, 12b) vorgesehen ist, der insbesondere eine Aufnahme für einen Befestigungsbolzen (28) aufweist.

4. Befestigungsclip nach Anspruch 3, **dadurch gekennzeichnet, dass** sich die Befestigungsaufnahme (26, 26a, 26b) quer in Längsrichtung (L) der Aufnahme (25, 25a, 25b) erstreckt und Fixierelemente, insbesondere Rastelemente (30, 30a, 30b) für den Befestigungsbolzen (28) aufweist.

5. Befestigungsclip nach einem der vorhergehenden Ansprüche, **dadurch gekennzeichnet, dass** zwei, insbesondere an gegenüberliegenden Seiten vorgesehene Koppelabschnitte (16, 16a, 16b) vorgesehen sind.

6. Befestigungsbaugruppe (58) mit zumindest zwei insbesondere baugleichen Befestigungsclips (10a, 10b) nach einem der vorhergehenden Ansprüche, wobei der zweite Befestigungsclip (10b) so gedreht ist, insbesondere um 180° gedreht ist, dass der Koppelabschnitt (16b) des zweiten Befestigungsclips (10b) mit dem Koppelabschnitt (16a) des ersten Befestigungsclips (10a) gekoppelt ist.

7. Befestigungsbaugruppe nach Anspruch 6, **dadurch gekennzeichnet, dass** die erste Verbindungsstruktur (34a) des ersten Befestigungsclips (10a) in die zweite Verbindungsstruktur (36b) des zweiten Befestigungsclips (10b) eingreift und die zweite Verbindungsstruktur (36a) des ersten Befestigungsclips (10a) in die erste Verbindungsstruktur (34b) des zweiten Befestigungsclips (10b) eingreift.

8. Befestigungsbaugruppe nach einem der Ansprüche 6 oder 7, **dadurch gekennzeichnet, dass** die erste Raststruktur (48a) des ersten Befestigungsclips (10a) mit der zweiten Raststruktur (50b) des zweiten Befestigungsclips (10b) verrastet und die zweite Raststruktur (50a) des ersten Befestigungsclips (10a) mit der ersten Raststruktur (48b) des zweiten Befestigungsclips (10b) verrastet.

9. Befestigungsbaugruppe nach einem der Ansprüche 6 bis 8, **dadurch gekennzeichnet, dass** zumindest ein Befestigungsclip (10a, 10b) zwei, insbesondere gegenüberliegende Koppelabschnitte (16a, 16b) aufweist.

## Claims

1. Fastening clip (10, 10a, 10b) for at least one line (11a, 11b), having a holding portion (14, 14a, 14b) with a receptacle (25, 25a, 25b), extending in a longitudinal direction (L), for the line (11a, 11b) and at least one hermaphroditic coupling portion (16, 16a, 16b) for connecting the fastening clip (10, 10a, 10b) to a second fastening clip (10, 10a, 10b) of identical construction, wherein a first connecting structure (34, 34a, 34b) and a second connecting structure (36, 36a, 36b) corresponding to the first connecting structure (34, 34a, 34b) are provided on the coupling portion (16, 16a, 16b), wherein the first connecting structure (34, 34a, 34b) has a groove (38, 38a, 38b) that widens in particular away from an elongate opening (40, 40a, 40b) and is open in an extension direction (E) and the second connecting structure (36, 36a, 36b) has a protruding rail (44, 44a, 44b) extending parallel to the groove (38, 38a, 38b), and in particular at its free end a thickened portion (46, 46a, 46b), **characterized in that** the first connecting structure (34, 34a, 34b) and the second connecting structure (36, 36a, 36b) are arranged in an offset manner in the longitudinal direction (L) of the receptacle (25), and the groove (38, 38a, 38b) and the rail (44, 44a, 44b) extend transversely to the longitudinal direction (L) of the receptacle (25, 25a, 25b), wherein a first latching structure (48, 48a, 48b) and a second latching structure (50, 50a, 50b) corresponding to the first latching structure (48, 48a, 48b) are provided on the coupling portion (16, 16a, 16b), wherein the second latching structure (50, 50a, 50b) is arranged in a manner offset through 180° with regard to the first latching structure (48, 48a, 48b) and the latching structures (48, 48a, 48b, 50, 50a, 50b) extend transversely to the longitudinal direction (L) of the receptacle (25, 25a, 25b) and each have a latching tab (52, 52a, 52b, 54, 54a, 54b), wherein the latching tabs are formed in a mirror-symmetric manner with regard to a plane arranged perpendicularly to the extension direction (E) of the groove (38, 38a, 38b) and of the rail (44, 44a, 44b) .

2. Fastening clip according to Claim 1, **characterized in that** the second connecting structure (36, 36a, 36b) is arranged on the coupling portion (16, 16a, 16b) in a manner offset and rotated through 180° with regard to the first connecting structure (34, 34a, 34b), wherein the connecting structures (34, 34a, 34b, 36, 36a, 36b) are in particular arranged such that the first connecting structure (34a) of a first fastening clip (10a) can engage in the second connecting structure (36b) of a second fastening clip (10b) with an identical coupling portion (16b) and the second connecting structure (36a) of the first fastening clip (10a) can engage in the first connecting structure (34a) of the second fastening clip (10b).

3. Fastening clip according to Claim 1, **characterized in that** a fastening portion (12, 12a, 12b) is provided, which has in particular a receptacle for a fastening bolt (28).

4. Fastening clip according to Claim 3, **characterized in that** the fastening receptacle (26, 26a, 26b) extends transversely in the longitudinal direction (L) of the receptacle (25, 25a, 25b) and has fixing elements, in particular latching elements (30, 30a, 30b) for the fastening bolt (28).

5. Fastening clip according to one of the preceding claims, **characterized in that** two coupling portions (16, 16a, 16b), provided in particular on opposite sides, are provided.

6. Fastening assembly (58) having at least two fastening clips (10a, 10b), in particular of identical construction, according to one of the preceding claims, wherein the second fastening clip (10b) has been rotated, in particular through 180°, such that the coupling portion (16b) of the second fastening clip (10b) is coupled with the coupling portion (16a) of the first fastening clip (10a).

7. Fastening assembly according to Claim 6, **characterized in that** the first connecting structure (34a) of the first fastening clip (10a) engages in the second connecting structure (36b) of the second fastening clip (10b) and the second connecting structure (36a) of the first fastening clip (10a) engages in the first connecting structure (34b) of the second fastening clip (10b).

8. Fastening assembly according to either of Claims 6 and 7, **characterized in that** the first latching structure (48a) of the first fastening clip (10a) latches together with the second latching structure (50b) of the second fastening clip (10b) and the second latching structure (50a) of the first fastening clip (10a) latches together with the first latching structure (48b) of the second fastening clip (10b).

9. Fastening assembly according to one of Claims 6 to 8, **characterized in that** at least one fastening clip (10a, 10b) has two, in particular opposite coupling portions (16a, 16b).

## Revendications

1. Clip de fixation (10, 10a, 10b) pour au moins une conduite (11a, 11b), avec une partie de maintien (14, 14a, 14b) avec un logement (25, 25a, 25b) s'étendant le long d'une direction longitudinale (L) pour la conduite (11a, 11b) et au moins une partie de couplage hermaphrodite (16, 16a, 16b) pour la liaison du clip de fixation (10, 10a, 10b) à un second clip de fixation (10, 10a, 10b) de structure identique, dans lequel il est prévu sur la partie de couplage (16, 16a, 16b) une première structure de liaison (34, 34a, 34b) ainsi qu'une seconde structure de liaison (36, 36a, 36b) correspondant à la première structure de liaison (34, 34a, 34b), dans lequel la première structure de liaison (34, 34a, 34b) présente une rainure (38, 38a, 38b) s'élargissant en particulier à partir d'une ouverture allongée (40, 40a, 40b) et ouverte dans une direction d'extension (E) et la seconde structure de liaison (36, 36a, 36b) présente un rail saillant (44, 44a, 44b) s'étendant parallèlement à la rainure (38, 38a, 38b) et en particulier à son extrémité libre une surépaisseur (46, 46a, 46b), **caractérisé en ce que** la première structure de liaison (34, 34a, 34b) et la seconde structure de liaison (36, 36a, 36b) sont disposées en décalage le long de la direction longitudinale (L) du logement (25) et la rainure (38, 38a, 38b) et le rail (44, 44a, 44b) s'étendent transversalement à la direction longitudinale (L) du logement (25, 25a, 25b), dans lequel il est prévu sur la partie de couplage (16, 16a, 16b) une première structure d'encliquetage (48, 48a, 48b) ainsi qu'une seconde structure d'encliquetage (50, 50a, 50b) correspondant à la première structure d'encliquetage (48, 48a, 48b), dans lequel la seconde structure d'encliquetage (50, 50a, 50b) est disposée en décalage de 180° par rapport à la première structure d'encliquetage (48, 48a, 48b) et les structures d'encliquetage (48, 48a, 48b, 50, 50a, 50b) s'étendent transversalement à la direction longitudinale (L) du logement (25, 25a, 25b) et présentent respectivement une patte d'encliquetage (52, 52a, 52b, 54, 54a, 54b), dans lequel les pattes d'encliquetage sont formées de façon symétrique par rapport à un plan disposé perpendiculairement à la direction d'extension (E) de la rainure (38, 38a, 38b) et du rail (44, 44a, 44b).

2. Clip de fixation selon la revendication 1, **caractérisé en ce que** la seconde structure de liaison (36, 36a, 36b) est disposée sur la partie de couplage (16, 16a, 16b) en position tournée de 180° et décalée par rapport à la première structure de liaison (34, 34a, 34b), dans lequel la première structure de liaison (34a) d'un premier clip de fixation (10a) peut s'engager dans la seconde structure de liaison (36b) d'un second clip de fixation (10b) avec une partie de couplage identique (16b) et la seconde structure de liaison (36a) du premier clip de fixation (10a) peut s'engager dans la première structure de liaison (34a) du second clip de liaison (10b).

3. Clip de fixation selon la revendication 1, **caractérisé en ce qu'**il est prévu une partie de fixation (12, 12a, 12b), qui présente au moins un logement pour un boulon de fixation (28).

4. Clip de fixation selon la revendication 3, **caractérisé en ce que** le logement de fixation (26, 26a, 26b) s'étend transversalement à la direction longitudinale (L) du logement (25, 25a, 25b) et présente des éléments de fixation, en particulier des éléments d'encliquetage (30, 30a, 30b) pour le boulon de fixation (28) .

5. Clip de fixation selon l'une quelconque des revendications précédentes, **caractérisé en ce qu'**il est prévu deux parties de couplage (16, 16a, 16b) prévues en particulier sur des côtés opposés.

6. Module de fixation (58) comportant au moins deux clips de fixation (10a, 10b) en particulier de structure identique selon l'une quelconque des revendications précédentes, dans lequel le second clip de fixation (10b) est tourné, en particulier est tourné de 180°, de telle manière que la partie de couplage (16b) du second clip de fixation (10b) soit couplée avec la partie de couplage (16a) du premier clip de fixation (10a).

7. Module de fixation selon la revendication 6, **caractérisé en ce que** la première structure de liaison (34a) du premier clip de fixation (10a) s'engage dans la seconde structure de liaison (36b) du second clip de fixation (10b) et la seconde structure de liaison (36a) du premier clip de fixation (10a) s'engage dans la première structure de liaison (34b) du second clip de fixation (10b).

8. Module de fixation selon l'une des revendications 6 ou 7, **caractérisé en ce que** la première structure d'encliquetage (48a) du premier clip de fixation (10a) est encliquetée avec la seconde structure d'encliquetage (50b) du second clip de fixation (10b) et la seconde structure d'encliquetage (50a) du premier clip de fixation (10a) est encliquetée avec la première structure d'encliquetage (48b) du second clip de fixation (10b).

9. Module de fixation selon l'une quelconque des revendications 6 à 8, **caractérisé en ce qu'**au moins un clip de fixation (10a, 10b) présente deux parties de couplage (16a, 16b), en particulier opposées.
